# EUROPÄISCHE PATENTSCHRIFT

(11) **EP 3 583 741 B1**
(45) Veröffentlichungstag und Bekanntmachung des Hinweises auf die Patenterteilung: **25.11.2020**
(21) Anmeldenummer: 18716942.0
(22) Anmeldetag: 28.03.2018
(51) Int. Cl.: H04L 9/32, H04L 29/06, G01D 4/00

(54) **VERFAHREN ZUR SICHERSTELLUNG EINER AUTHENTIZITÄT MINDESTENS EINES WERTES EINER GERÄTEEIGENSCHAFT, COMPUTERPROGRAMM, COMPUTERLESBARES SPEICHERMEDIUM UND VORRICHTUNG**
METHOD FOR ENSURING THE AUTHENTICITY OF AT LEAST ONE VALUE OF A DEVICE PROPERTY, COMPUTER PROGRAM, COMPUTER-READABLE STORAGE MEDIUM AND DEVICE
PROCÉDÉ DE GARANTIE D'UNE AUTHENTIFICATION D'AU MOINS UNE VALEUR D'UNE CARACTÉRISTIQUE D'APPAREIL, PROGRAMME INFORMATIQUE ET SUPPORT D'ENREGISTREMENT LISIBLE PAR ORDINATEUR ET DISPOSITIF

(30) Priorität: 05.04.2017 EP 17165031
(43) Veröffentlichungstag der Anmeldung: 25.12.2019
(73) Patentinhaber: Siemens Aktiengesellschaft, 80333 München (DE)
(72) Erfinder: DRUMM, Oliver, 76344 Eggenstein-Leopoldshafen (DE); PALMIN, Anna, 76187 Karlsruhe (DE)
(86) Internationale Anmeldenummer: PCT/EP2018/057942
(87) Internationale Veröffentlichungsnummer: WO 2018/184945

(56) Entgegenhaltungen:
- DE-U1-202016 105 474

## Beschreibung

Die Erfindung betrifft ein Verfahren zur Sicherstellung einer Authentizität mindestens eines Wertes einer Geräteeigenschaft.

Betriebswerte dynamischer Geräteeigenschaften spielen bei der Geräteüberwachung eine große Rolle. Derzeit werden die Betriebswerte oftmals ungesichert an eine Auswerteeinheit übermittelt. Dann kann nicht sichergestellt werden, dass die Betriebswerte unverändert in der Auswerteeinheit empfangen und verarbeitet werden. Werden die Daten jedoch verschlüsselt an die Auswerteeinheit übermittelt, so sind die Betriebswerte nicht sofort einsehbar und verwertbar, sondern müssen erst zeitaufwendig entschlüsselt werden.

Ein weiterer Ansatz aus dem Stand der Technik ist im Dokument DE 20 2016 105474 U1 gezeigt.

Eine Aufgabe der Erfindung ist es, das bisherige Verfahren zu verbessern.

Die Lösung dieser Aufgabe ergibt sich durch die Merkmale der angehängten Patentansprüche 1 bis 13.

Die Aufgabe wird gelöst durch ein Verfahren zur Sicherstellung einer Authentizität mindestens eines Wertes einer Geräteeigenschaft, wobei die Geräteeigenschaft eine Eigenschaft eines Geräts ist. Bei dem Verfahren wird erfindungsgemäß zumindest ein Betriebswert zumindest einer dynamischen Geräteeigenschaft unter Verwendung eines digitalen Schlüssels signiert, wobei eine betriebswertabhängige digitale Signatur erstellt wird.

Die Erfindung basiert auf der Idee, dass Betriebswerte dynamischer Geräteeigenschaften, die bisher ungeschützt gespeichert und/oder übermittelt wurden, signiert werden können. Auf diese Weise kann die Authentizität und/oder eine Integrität dieser Betriebswerte sichergestellt werden. Insbesondere kann sichergestellt werden, dass die Betriebswerte nicht manipuliert wurden. Mit anderen Worten: Die Signatur kann dazu verwendet werden, eine Authentizität und/oder eine Integrität des zumindest einen Betriebswertes sicherzustellen. Bei dem Verfahren bleiben die Betriebswerte zweckmäßigerweise einsehbar und sofort verwertbar (insbesondere im Gegensatz zu einer Verschlüsselung). Eine zeitaufwendige Entschlüsselung kann damit entfallen.

Zweckmäßigerweise ist das Gerät eine technisch betreibbare Einheit. Weiter kann das Gerät eine Gruppe von technisch betreibbaren Einheiten sein, deren jede Einheit einzeln funktionsfähig ist.

Ein Betriebswert einer Geräteeigenschaft, im Folgenden auch nur als Betriebswert bezeichnet, ist vorzugsweise ein dynamischer Wert. Zweckmäßigerweise ist der Betriebswert abhängig von einer Zeit, insbesondere von einer Betriebszeit des Gerätes. Der Betriebswert kann ermittelt werden, d. h. der Betriebswert kann bestimmt, gemessen, ausgelesen, eingelesen usw. werden. Insbesondere kann der Betriebswert ein ermittelter Wert der (jeweiligen) Geräteeigenschaft sein.

Als eine betriebswertabhängige digitale Signatur, im Folgenden auch nur als Signatur bezeichnet, kann eine digitale Signatur aufgefasst werden, die von dem zumindest einen Betriebswert abhängig ist. Zweckmäßigerweise gewährleistet die Signatur die Authentizität des Betriebswerts. Weiter ist es vorteilhaft, wenn die Signatur eine Integrität des Betriebswerts gewährleistet.

Vorzugsweise wird die Signatur bei einer Änderung eines des zumindest einen Betriebswerts über einen vorgegebenen Schwellwert aktualisiert. Als eine Änderung eines des zumindest einen Betriebswerts über einen vorgegebenen Schwellwert kann es angesehen werden, wenn sich zumindest ein Betriebswert um mehr als den angegebenen Schwellwert ändert. Beispielsweise kann die Signatur aktualisiert werden, indem sie neu erstellt wird. Vorzugsweise wird die Signatur aktualisiert, indem der zuletzt ermittelte Betriebswert der (jeweiligen) Geräteeigenschaft signiert wird.

Der digitale Schlüssel kann ein privater Schlüssel sein. Weiter kann der digitale Schlüssel ein geheimer Schlüssel sein.

Vorzugsweise umfasst die zumindest eine Geräteeigenschaft eine Betriebszeit des Gerätes. Entsprechend kann der Betriebswert der Wert der Betriebszeit sein. Weiter kann der vorgegebene Schwellwert eine vorgegebene Zeitdauer sein, z.B. 1 h, 12 h, 24 h usw.. Zum Beispiel kann die Signatur bei einer Änderung des Werts der Betriebszeit über die vorgegebene Zeitdauer - d. h. wenn sich der Wert der Betriebszeit um mehr als die vorgegebene Zeitdauer ändert - aktualisiert werden.

Weiter kann die zumindest eine Geräteeigenschaft eine Fehleranzahl des Gerätes umfassen. Als Fehler des Geräts können/kann ein Fehler einer Hardware des Geräts und/oder ein Fehler einer Software des Geräts aufgefasst werden. Der Betriebswert kann der Wert der Fehleranzahl sein. Weiter kann der vorgegebene Schwellwert eine vorgegebene Anzahl sein, z.B. 1.

Außerdem kann die zumindest eine Geräteeigenschaft einen Fehlercode des Gerätes umfassen.

Ferner kann die zumindest eine Geräteeigenschaft eine Anzahl an Neustarts des Gerätes umfassen. Als Neustart des Gerätes kann ein Neustart einer Hardware des Geräts aufgefasst werden, beispielsweise wenn eine Rotation eines Rotationselementes des Gerätes neu gestartet wird. Weiter kann als Neustart des Gerätes ein Neustart einer Software des Geräts aufgefasst werden.

Weiter kann die zumindest eine Geräteeigenschaft eine Anzahl an dem Gerät durchgeführten Wartungen umfassen. Als Wartung am Gerät kann eine Wartung der Hardware des Gerätes und/oder der Software des Gerätes aufgefasst werden.

Ferner kann die zumindest eine Geräteeigenschaft einen vom Gerät ermittelten Messwert und/oder einen Drift eines vom Gerät ermittelten Messwerts umfassen. Vorzugsweise ist der Messwert ein Wert eines physikalischen Parameters und/oder eines chemischen Parameters. Der Messwert kann beispielsweise ein Wert eines Drucks, einer Temperatur, einer Leistungsaufnahme oder ähnliches sein.

In einer bevorzugten Ausführungsform der Erfindung werden ausschließlich ein oder mehrere Betriebswerte genutzt, welcher/welche von einer Betriebszeit des Geräts abhängig ist/sind. Mit anderen Worten werden vorzugsweise ausschließlich eine oder mehrere dynamische Geräteeigenschaften genutzt.

Prinzipiell ist es jedoch auch möglich, dass - insbesondere neben den dynamischen Geräteeigenschaften - auch statische Geräteeigenschaften mit festen Werten genutzt werden. Statische Geräteeigenschaften können z. B. eine Seriennummer des Gerätes, eine Herstellerangabe, eine Gerätebezeichnung, eine Gerätetypangabe, und/oder ein Baujahr des Gerätes sein.

In einer vorteilhaften Ausführungsform der Erfindung wird aus dem zumindest einen Betriebswert und aus der Signatur ein Zertifikat erstellt.

Zweckmäßigerweise wird das Zertifikat zur sicheren Übermittlung des zumindest einen Betriebswertes an einen Empfänger verwendet. Weiter ist es zweckmäßig, wenn das Zertifikat dazu verwendet wird, eine Authentizität und/oder eine Integrität des zumindest einen Betriebswertes sicherzustellen.

Das Zertifikat kann bei einer Änderung eines des zumindest einen Betriebswertes über einen bestimmten Schwellwert aktualisiert werden. Beispielsweise kann das Zertifikat aktualisiert werden, indem es neu erstellt wird. Vorzugsweise wird zur Aktualisierung des Zertifikates ein zuletzt ermittelter Betriebswert der (jeweiligen) Geräteeigenschaft signiert, wobei vorzugsweise eine aktuelle Signatur erstellt wird. Zweckmäßigerweise wird das aktuelle Zertifikat aus dem zuletzt ermittelten Betriebswert bzw. aus den zuletzt ermittelten Betriebswerten und aus der aktuellen Signatur erstellt.

Das Zertifikat kann von dem Gerät an einen Empfänger übermittelt werden. Vorzugsweise authentifiziert sich der Empfänger bei dem Gerät vor der Übermittlung.

Ferner kann das Zertifikat geprüft werden. Beispielsweise kann das Zertifikat von dem Empfänger geprüft werden. Weiter kann das Zertifikat von einer Einheit geprüft werden, die mit dem Gerät verbunden ist. Zweckmäßigerweise wird, insbesondere unter Verwendung eines öffentlichen Schlüssels, geprüft, ob die Signatur zu dem zumindest einen Betriebswert passt. Zweckmäßigerweise wird das sogenannte Public-Key-Verfahren eingesetzt.

Auf diese Weise kann die Authentizität und die Integrität des zumindest einen Betriebswerts sichergestellt werden. Insbesondere kann sichergestellt werden, dass der zumindest eine Betriebswert nicht manipuliert wurde.

Ferner ist die Erfindung auf ein Computerprogramm mit Befehlen gerichtet. Wenn das Computerprogramm auf einem Computer ausgeführt wird, veranlassen die Befehle diesen Computer, das zuvor genannte Verfahren und/oder dessen Weiterbildungen auszuführen. Insbesondere können die Befehle den Computer veranlassen, die oben genannte Signatur zu erstellen und/oder das oben genannte Zertifikat zu erstellen und gegebenenfalls das Zertifikat an einen Empfänger zu übermitteln.

Weiter ist die Erfindung auf ein computerlesbares Speichermedium mit Befehlen gerichtet. Wenn diese Befehle durch einen Computer ausgeführt werden, veranlassen die Befehle diesen Computer, das zuvor genannte Verfahren auszuführen. Insbesondere können die Befehle den Computer veranlassen, die oben genannte Signatur zu erstellen und/oder das oben genannte Zertifikat zu erstellen und gegebenenfalls das Zertifikat an einen Empfänger zu übermitteln. Die Befehle können die zuvor im Zusammenhang mit dem Computerprogramm genannten Befehle sein.

Außerdem ist die Erfindung gerichtet auf die Verwendung eines digitalen Schlüssels zur Erzeugung einer Signatur aus zumindest einen Betriebswert zumindest einer dynamischen Geräteeigenschaft, wobei die Geräteeigenschaft sinnvollerweise eine Eigenschaft eines Geräts ist. Zweckmäßigerweise wird die Signatur wiederum zur Erstellung eines Zertifikats für ein Gerät genutzt.

Ferner ist die Erfindung gerichtet auf eine Vorrichtung zur Sicherstellung einer Authentizität mindestens eines Wertes einer Geräteeigenschaft, wobei die Geräteeigenschaft eine Eigenschaft eines Geräts ist und das Gerät zumindest eine dynamische Geräteeigenschaft aufweist, für welche zumindest ein Betriebswert bestimmbar ist. Erfindungsgemäß umfasst die Vorrichtung eine Bestimmungseinheit, welche zur Bestimmung des zumindest einen Betriebswerts eingerichtet ist. Weiter umfasst die Vorrichtung eine Zertifizierungseinheit, welche dazu eingerichtet ist, den zumindest einen Betriebswert zu signieren, wobei eine betriebswertabhängige digitale Signatur erstellt wird.

Zweckmäßigerweise ist die Zertifizierungseinheit weiter dazu eingerichtet, aus dem zumindest einen Betriebswert und aus der Signatur das Zertifikat zu erstellen.

Außerdem kann die Zertifizierungseinheit dazu eingerichtet sein, das Zertifikat bei einer Änderung eines des zumindest einen Betriebswerts über einen bestimmten Schwellwert zu aktualisieren.

Die Vorrichtung kann zur Durchführung des zuvor genannten Verfahrens und/oder seiner Weiterbildungen genutzt werden. Insbesondere kann die Vorrichtung genutzt werden, um die in Verbindung mit dem Verfahren erwähnte Signatur zu erstellen und/oder das in Verbindung mit dem Verfahren erwähnte Zertifikat zu erstellen und gegebenenfalls das Zertifikat an einen Empfänger zu übermitteln.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren und der erfindungsgemäßen Vorrichtung kombinierbar. So sind Verfahrensmerkmale auch als Eigenschaft der entsprechenden Vorrichtungseinheit gegenständlich formuliert zu sehen und umgekehrt.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit den Zeichnungen näher erläutert wird. Das Ausführungsbeispiel dient der Erläuterung der Erfindung und beschränkt die Erfindung nicht auf die darin angegebene Kombination von Merkmalen, auch nicht in Bezug auf funktionale Merkmale. Außerdem können dazu geeignete Merkmale des Ausführungsbeispiels auch explizit isoliert betrachtet, aus dem Ausführungsbeispiel entfernt und/oder mit einem beliebigen der Ansprüche kombiniert werden.

### Es zeigen:

- FIG 1: die Erstellung einer Signatur und Erstellung eines Zertifikates,
- FIG 2: die Übermittlung des Zertifikates aus FIG 1 an eine Datenbank eines Betreibers des Geräts und
- FIG 3: die Übermittlung des Zertifikates an einen Hersteller des Geräts.

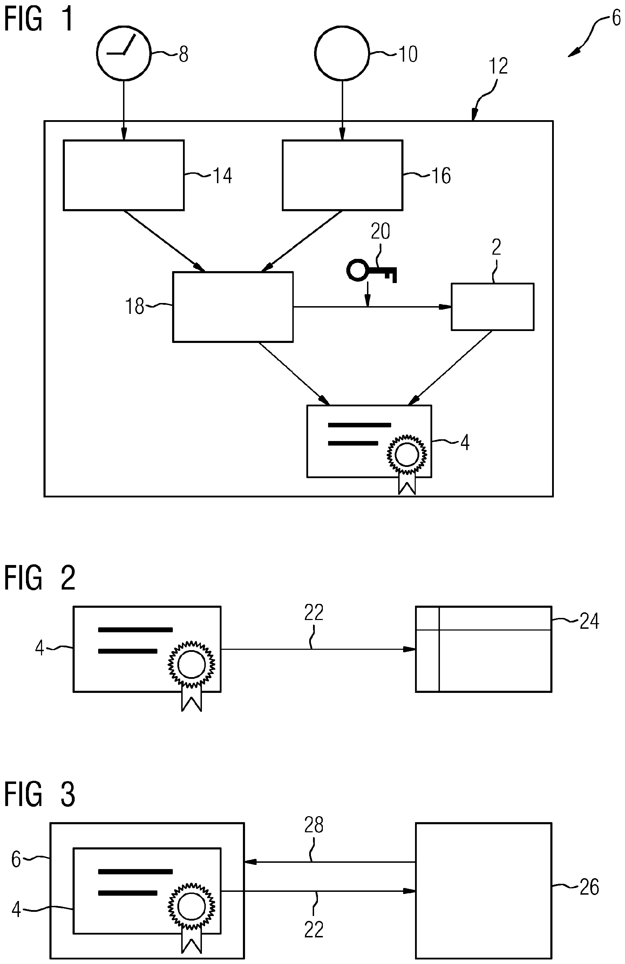

FIG 1 zeigt schematisch, wie eine Signatur 2 erstellt wird. Weiter zeigt FIG 1, wie ein Zertifikat 4 erstellt wird. Beide Vorgänge laufen innerhalb eines Gerätes 6 ab.

Das Gerät 6 umfasst mehrere Bestimmungseinheiten 8, 10. In der Figur sind beispielhaft zwei Bestimmungseinheiten 8, 10 gezeigt. Prinzipiell kann das Gerät 6 auch jede andere Anzahl an Bestimmungseinheiten aufweisen. Weiter umfasst das Gerät 6 eine Zertifizierungseinheit 12.

Unter Verwendung der ersten Bestimmungseinheit 8 wird ein erster Betriebswert 14 einer ersten Geräteeigenschaft ermittelt. In diesem Ausführungsbeispiel ist die erste Bestimmungseinheit 8 ein Zeitgeber. Weiter ist in diesem Beispiel der erste Betriebswert 14 ein Wert einer Betriebszeit. D. h. die erste Geräteeigenschaft ist in diesem Beispiel die Betriebszeit.

Außerdem wird unter Verwendung der zweiten Bestimmungseinheit 10 ein zweiter Betriebswert 16 einer zweiten Geräteeigenschaft ermittelt. In diesem Ausführungsbeispiel ist die zweite Bestimmungseinheit 10 ein Fehlerzähler. Der zweite Betriebswert 16 ist in diesem Beispiel ein Wert einer Fehleranzahl. D. h. die zweite Geräteeigenschaft ist in diesem Beispiel die Fehleranzahl. Prinzipiell können zusätzlich oder alternativ auch andere Betriebswerte bestimmt werden. Beispielsweise kann auch eine Fehlernummer bestimmt werden.

Die Betriebswerte 14, 16 - insbesondere alle bestimmten Betriebswerte 14, 16 - können von den Bestimmungseinheiten 8, 10 an die Zertifizierungseinheit 12 übergeben werden. Weiter ist es möglich, dass die Zertifizierungseinheit 12 die Betriebswerte 14, 16 aus den Bestimmungseinheiten 8, 10 ausliest.

Die Betriebswerte 14, 16 - insbesondere alle bestimmten Betriebswerte 14, 16 - werden zu einem Eigenschaftsvektor 18 aneinandergereiht ("Konkatenierung") und dann mittels eines digitalen Schlüssels 20 signiert, wobei eine betriebswertabhängige digitale Signatur 2 erzeugt wird. Sowohl die Aneinanderreihung ("Konkatenierung") als auch die Signierung erfolgt unter Verwendung der Zertifizierungseinheit 12. Der digitale Schlüssel 20 ist ein geheimer, privater Schlüssel.

Aus dem Eigenschaftsvektor 18, welcher die beiden Betriebswerte 14, 16 umfasst, und aus der Signatur 2 wird das Zertifikat 4 erzeugt. Auch die Erstellung des Zertifikates 4 erfolgt unter Verwendung der Zertifizierungseinheit 12.

Die Signatur 2 sowie das Zertifikat 4 werden bei einer Änderung eines des zumindest einen Betriebswerts 14, 16 über einen vorgegebenen Schwellwert aktualisiert. Zweckmäßigerweise erfolgt die Aktualisierung dadurch, dass sowohl die Signatur 2 als auch das Zertifikat 4 neu erstellt wird.

Beispielsweise erfolgt die Aktualisierung, wenn sich die Betriebszeit um mehr als eine vorgegebenen Zeitspanne, z.B. um mehr als 24 h, ändert. Weiter erfolgt die Aktualisierung beispielsweise, wenn sich die Fehleranzahl um mehr als einen vorgegebenen Zahlenwert, z.B. um mehr als 0,5, ändert.

Die Authentizität sowie die Integrität der Betriebswerte 14, 16 kann durch das Zertifikat 4, insbesondere durch die betriebswertabhängige Signatur 2, sichergestellt werden. Insbesondere kann sichergestellt werden, dass die Betriebswerte 14, 16 nicht manipuliert wurden.

Das Zertifikat 4 kann an einen Empfänger 24, 26 übermittelt werden (vgl. FIG 2 und FIG 3).

FIG 2 zeigt die Übermittlung 22 des Zertifikates 4 an eine Datenbank 24 eines Betreibers des Geräts 6. Die Übermittlung 22 ist mittels eines Pfeils 22 dargestellt.

D. h. die Datenbank 24 des Betreibers ist der Empfänger des Zertifikates 4.

Der Empfänger, d. h. hier die Datenbank 24 des Betreibers, kann zunächst prüfen, ob die Signatur 2 des Zertifikates 4 zu den Betriebswerten 14, 16, welche der Eigenschaftsvektor 18 umfasst, passt. Die Prüfung erfolgt unter Verwendung eines öffentlichen Schlüssels. Wenn die Signatur 2 des Zertifikates 4 zu den Betriebswerten 14, 16 passt, dann ist die Authentizität und die Integrität der Betriebswerte 14, 16 gesichert und dann können die Betriebswerte 14, 16 in die Datenbank 24 geschrieben werden. Auf diese Weise wird die Datenbank 24 aktuell gehalten.

In der Datenbank 24 werden also sowohl das Gerät 6 als auch seine Betriebswerte 14, 16 erfasst. Außerdem kann unter Verwendung der Datenbank 24 der Verlauf bzw. die Entwicklung der Betriebswerte 14, 16 nachvollzogen werden. Auf Grundlage dieser Daten kann ein Erreichen eines kritischen Zustandes des Gerätes 6 bzw. einer seiner Komponenten vorhergesagt werden.

Auf diese Weise kann die Datenbank 24 zur Inventarisierung, zur Modernisierungsplanung und/oder zur Instandhaltungsplanung herangezogen werden.

FIG 3 zeigt die Übermittlung 22 des Zertifikates 4 an einen Hersteller 26 des Geräts 6.

Zunächst muss ein Kommunikationskanal zwischen dem Gerät 6 und dem Hersteller 26 aufgebaut werden. Ein Kommunikationskanal könnte z.B. über einen Anlagenbus und/oder ein Leitsystem erfolgen, mit welchem das Gerät verbunden ist. Weiter könnte das Gerät über ein Mobilfunknetz, z.B. über das Globale System für Mobile Kommunikation (GSM), zu einem vorbestimmten Zeitpunkt eine Verbindung zu dem Hersteller 26 aufbauen. Weiter ist es möglich, dass ein Computer des Herstellers zu Diagnose und/oder Wartungszwecken mit dem Gerät 6 verbunden wird. Dann kann das Zertifikat 4 an den Computer übermittelt werden, welcher es (ggf. später) an den Hersteller 26 weitergibt. Weiter ist es auch möglich, dass das Gerät 6 (z.B. zu Reparaturzwecken) direkt an den Hersteller 26 übergeben bzw. geschickt wird, sodass dieser das Zertifikat 4 von dem Gerät 6 direkt herunterladen kann.

Vorzugsweise authentifiziert sich der Hersteller 26 bei dem Gerät 6 zunächst. Die Authentifizierung ist in FIG 3 mittels eines Pfeils 28 vom Hersteller 26 zum Gerät 6 dargestellt. Auf diese Weise wird sichergestellt, dass der Hersteller 26 befugt ist, das Zertifikat 4 zu empfangen. Dann sendet das Gerät 6 das Zertifikat 4 an den Hersteller 26. D. h. der Hersteller 26 ist der Empfänger des Zertifikates 4.

Der Empfänger, d. h. hier der Hersteller 26, kann zunächst prüfen, ob die Signatur 2 des Zertifikates 4 zu den Betriebswerten 14, 16, welche der Eigenschaftsvektor 18 umfasst, passt. D.h. mittels des Zertifikates 4 wird geprüft, ob die an den Hersteller 26 übermittelten Betriebswerte 14, 16 manipuliert wurden. Die Prüfung erfolgt unter Verwendung eines öffentlichen Schlüssels. Wenn die Signatur 2 des Zertifikates 4 zu den Betriebswerten 14, 16 passt, dann ist die Authentizität und die Integrität der Betriebswerte 14, 16 gesichert. Die Betriebswerte 14, 16 werden dann beispielsweise an die Auswerteeinheit des Herstellers 26 übermittelt.

Der Hersteller 26 kann z.B. unter Verwendung der Auswerteeinheit die übermittelten Betriebswerte 14, 16 nutzen, um häufige Fehler an dem Gerät 6 bzw. an dem Gerätetyp zu identifizieren, um dem Betreiber des Gerätes 6 auf mögliche Updates hinzuweisen und/oder durch die Auswertung zumindest eines der Betriebswerte 14, 16 auf eine nötige Wartung und/oder Reparatur hinweisen.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Sicherstellung einer Authentizität mindestens eines Wertes einer Geräteeigenschaft, wobei die Geräteeigenschaft eine Eigenschaft eines Geräts (6) ist,
bei welchem Verfahren
zumindest ein Betriebswert (14, 16) zumindest einer dynamischen Geräteeigenschaft unter Verwendung eines digitalen Schlüssels (20) signiert wird, wobei eine betriebswertabhängige digitale Signatur (2) erstellt wird,
**dadurch gekennzeichnet, dass**
aus dem zumindest einen Betriebswert (14, 16) und aus der Signatur (2) ein Zertifikat (4) erstellt wird, und
das Zertifikat (4) bei einer Änderung eines des zumindest einen Betriebswertes (14, 16) über einen bestimmten Schwellwert aktualisiert wird.

2. Verfahren nach Anspruch 1,
**dadurch gekennzeichnet, dass**
die Signatur (2) bei einer Änderung eines des zumindest einen Betriebswerts (14, 16) über einen vorgegebenen Schwellwert aktualisiert wird.

3. Verfahren nach Anspruch 1 oder 2,
**dadurch gekennzeichnet, dass**
der digitale Schlüssel (20) ein privater Schlüssel ist.

4. Verfahren nach einem der vorhergehenden Ansprüche,
**dadurch gekennzeichnet, dass**
die zumindest eine Geräteeigenschaft eine Betriebszeit des Gerätes (6) umfasst.

5. Verfahren nach einem der vorhergehenden Ansprüche,
**dadurch gekennzeichnet, dass**
die zumindest eine Geräteeigenschaft
eine Fehleranzahl des Gerätes (6),
einen Fehlercode des Gerätes (6),
eine Anzahl an Neustarts des Gerätes (6),
eine Anzahl an dem Gerät (6) durchgeführten Wartungen,
einen vom Gerät (6) ermittelten Messwert und/oder einen Drift eines vom Gerät (6) ermittelten Messwerts umfasst.

6. Verfahren nach einem der vorhergehenden Ansprüche,
**dadurch gekennzeichnet, dass**
ausschließlich ein oder mehrere Betriebswerte (14, 16) genutzt werden, welcher/welche von einer Betriebszeit des Geräts (6) abhängig ist/sind.

7. Verfahren nach einem der vorhergehenden Ansprüche,
**dadurch gekennzeichnet, dass**
das Zertifikat (4) von dem Gerät (6) an einen Empfänger (24, 26) übermittelt wird.

8. Verfahren nach Anspruch 7,
**dadurch gekennzeichnet, dass**
sich der Empfänger (24, 26) bei einem Gerät (6) vor der Übermittlung (22) authentifiziert.

9. Verfahren nach einem der vorhergehenden Ansprüche,
**dadurch gekennzeichnet, dass**
das Zertifikat (4) geprüft wird, wobei unter Verwendung eines öffentlichen Schlüssels geprüft wird, ob die Signatur (2) zu dem zumindest einen Betriebswert (14, 16) passt.

10. Computerprogramm mit Befehlen, welche, wenn das Computerprogramm auf einem Computer ausgeführt wird, diesen veranlasst, das Verfahren nach einem der Ansprüche 1 bis 8 auszuführen.

11. Computerlesbares Speichermedium mit Befehlen, welche, wenn sie durch einen Computer ausgeführt werden, diesen Computer veranlassen, das Verfahren nach einem der Ansprüche 1 bis 7 auszuführen.

12. Verwendung eines digitalen Schlüssels (20) zur Erzeugung einer Signatur (2) aus zumindest einen Betriebswert (14, 16) zumindest einer dynamischen Geräteeigenschaft eines Geräts (6), wobei die Signatur (2) wiederum zur Erstellung eines Zertifikats (4) für das Gerät (6) aus dem zumindest einen Betriebswert (14, 16) und der digitalen Signatur (2) genutzt wird und das Zertifikat (4) bei einer Änderung eines des zumindest einen Betriebswertes (14, 16) über einen bestimmten Schwellwert aktualisiert wird.

13. Vorrichtung zur Sicherstellung einer Authentizität mindestens eines Wertes einer Geräteeigenschaft,
wobei die Geräteeigenschaft eine Eigenschaft eines Geräts (6) ist und das Gerät (6) zumindest eine dynamische Geräteeigenschaft aufweist, für welche zumindest ein Betriebswert (14, 16) bestimmbar ist,
wobei die Vorrichtung eine Bestimmungseinheit (8, 10) umfasst, welche zur Bestimmung des zumindest einen Betriebswerts (14, 16) eingerichtet ist,
und wobei die Vorrichtung eine Zertifizierungseinheit (12) umfasst, welche dazu eingerichtet ist
den zumindest einen Betriebswert (14, 16) zu signieren, wobei eine betriebswertabhängige digitale Signatur (2) erstellt wird,
**dadurch gekennzeichnet, dass**
die Zertifizierungseinheit (12) weiterhin dazu eingerichtet ist, aus dem zumindest einen Betriebswert (14, 16) und aus der Signatur (2) ein Zertifikat (4) zu erstellen und das Zertifikat (4) bei einer Änderung eines des zumindest einen Betriebswerts (14, 16) über einen bestimmten Schwellwert zu aktualisieren.

## Claims

1. Method for ensuring the authenticity of at least one value of a device property, wherein the device property is a characteristic of a device (6),
in which method
at least one operating value (14, 16) of at least one dynamic device property is signed using a digital key (20), wherein an operating-value-dependent digital signature (2) is generated, **characterised in that**
a certificate (4) is generated from the at least one operating value (14, 16) and from the signature (2), and
the certificate (4) is updated if one of the at least one operating values (14, 16) changes above a particular threshold value.

2. Method according to claim 1,
**characterised in that**
the signature (2) is updated if one of the at least one operating values (14, 16) changes above a predefined threshold value.

3. Method according to claim 1 or 2,
**characterised in that**
the digital key (20) is a private key.

4. Method according to one of the preceding claims,
**characterised in that**
the at least one device property comprises an operating time of the device (6).

5. Method according to one of the preceding claims,
**characterised in that**
the at least one device property comprises
an error count of the device (6),
an error code of the device (6),
a number of restarts of the device (6),
a number of maintenance activities carried out on the device (6),
a measured value ascertained by the device (6) and/or
a drift of a measured value ascertained by the device (6).

6. Method according to one of the preceding claims,
**characterised in that**
exclusively one or more operating values (14, 16) are used which is/are dependent on an operating time of the device (6).

7. Method according to one of the preceding claims,
**characterised in that**
the certificate (4) is transmitted from the device (6) to a receiver (24, 26).

8. Method according to claim 7,
**characterised in that**
the receiver (24, 26) authenticates itself to a device (6) prior to the transmission (22).

9. Method according to one of the preceding claims,
**characterised in that**
the certificate (4) is checked, wherein a public key is used to check whether the signature (2) matches the at least one operating value (14, 16).

10. Computer program comprising commands which, when the computer program is executed on a computer, causes the latter to carry out the method according to one of claims 1 to 8.

11. Computer-readable storage medium containing commands which, when they are executed by a computer, cause said computer to carry out the method according to one of claims 1 to 7.

12. Use of a digital key (20) to generate a signature (2) from at least one operating value (14, 16) of at least one dynamic device property of a device (6), wherein the signature (2) is in turn used to generate a certificate (4) for the device (6) from the at least one operating value (14, 16) and from the digital signature (2), and the certificate (4) is updated if one of the at least one operating values (14, 16) changes above a particular threshold value.

13. Apparatus for ensuring the authenticity of at least one value of a device property,
wherein the device property is a characteristic of a device (6) and the device (6) has at least one dynamic device property for which at least one operating value (14, 16) can be determined,
wherein the apparatus comprises a determination unit (8, 10) which is designed to determine the at least one operating value (14, 16),
and wherein the apparatus comprises a certification unit (12) which is designed to sign the at least one operating value (14, 16), wherein an operating-value-dependent digital signature (2) is generated,
**characterised in that**
the certification unit (12) is further designed to generate a certificate (4) from the at least one operating value (14, 16) and from the signature (2) and the certificate (4) is updated if one of the at least one operating values (14, 16) changes above a particular threshold value.

## Revendications

1. Procédé pour s'assurer de l'authenticité d'au moins une valeur d'une propriété d'appareil, la propriété d'appareil étant une propriété d'un appareil (6),
procédé dans lequel
on signe au moins une valeur (14, 16) de fonctionnement au moins d'une propriété dynamique d'appareil en utilisant une clé (20) numérique, une signature (2) numérique, qui dépend de la valeur de fonctionnement, étant établie, **caractérisé en ce qu'**
à partir de la au moins une valeur (14, 16) de fonctionnement et de la signature (2), on établit un certificat (4), et
on met à jour le certificat (4) s'il se produit une variation de l'une de la au moins une valeur (14, 16) de fonctionnement au-dessus d'une valeur de seuil déterminée.

2. Procédé suivant la revendication 1,
**caractérisé en ce que**
l'on met à jour la signature (2) s'il se produit une variation de l'une de la au moins une valeur (14, 16) de fonctionnement au-dessus d'une valeur de seuil donnée à l'avance.

3. Procédé suivant la revendication 1 ou 2,
**caractérisé en ce que**
la clé (20) numérique est une clé privée.

4. Procédé suivant l'une des revendications précédentes,
**caractérisé en ce que**
la au moins une propriété d'appareil comprend un temps de fonctionnement de l'appareil (6).

5. Procédé suivant l'une des revendications précédentes,
**caractérisé en ce que**
la au moins une propriété d'appareil comprend
un nombre de défaillances de l'appareil (6),
un code défectueux de l'appareil (6),
un nombre de redémarrages de l'appareil (6),
un nombre d'entretiens effectués sur l'appareil (6),
une valeur de mesure déterminée par l'appareil (6) et/ou une dérive d'une valeur de mesure déterminée par l'appareil (6).

6. Procédé suivant l'une des revendications précédentes,
**caractérisé en ce que**
l'on utilise exclusivement une ou plusieurs valeurs (14, 16) de fonctionnement, qui dépend/dépendent d'un temps de fonctionnement de l'appareil (6).

7. Procédé suivant l'une des revendications précédentes,
**caractérisé en ce que**
l'on transmet le certificat (4) de l'appareil (6) à un récepteur (24, 26).

8. Procédé suivant la revendication 7,
**caractérisé en ce que**
le récepteur (24, 26) s'authentifie auprès de l'appareil (6) avant la transmission (22).

9. Procédé suivant l'une des revendications précédentes,
**caractérisé en ce que**
l'on contrôle le certificat (4), dans lequel, en utilisant une clé publique, on contrôle si la signature (2) cadre avec la au moins une valeur (14, 16) de fonctionnement.

10. Programme d'ordinateur ayant des instructions, qui, lorsque le programme d'ordinateur est réalisé sur un ordinateur, fait que celles-ci exécutent le procédé suivant l'une des revendications 1 à 8.

11. Support de mémoire déchiffrable par ordinateur ayant des instructions, qui, lorsqu'elles sont réalisées par un ordinateur, font que cet ordinateur exécute le procédé suivant l'une des revendications 1 à 7.

12. Utilisation d'une clé (20) numérique pour produire une signature (2) à partir d'au moins une valeur (14, 16) de fonctionnement d'au moins une propriété dynamique d'appareil d'un appareil (6), la signature (2) étant utilisée à nouveau pour l'établissement d'un certificat (4) pour l'appareil (6) à partir de la au moins une valeur (14, 16) de fonctionnement et de la signature (2) numérique et le certificat (4) étant mis à jour s'il se produit une variation de l'une de la au moins une valeur (14, 16) de fonctionnement au-dessus d'une valeur de seuil déterminée.

13. Système pour s'assurer d'une authenticité d'au moins une valeur d'une propriété d'appareil,
dans lequel la propriété d'appareil est une propriété d'un appareil (6) et l'appareil (6) a au moins une propriété dynamique d'appareil, pour laquelle au moins une valeur (14, 16) de fonctionnement peut être déterminée,
dans lequel le système comprend une unité (8, 10) de détermination conçue pour la détermination de la au moins une valeur (14, 16) de fonctionnement,
et dans lequel le système comprend une unité (12) de certification conçue pour signer la au moins une valeur (14, 16) de fonctionnement, une signature (2) numérique, qui dépend de la valeur de fonctionnement étant établie, **caractérisé en ce que**
l'unité (12) de certification est conçue, en outre, pour établir, à partir de la au moins une valeur (14, 16) de fonctionnement et de la signature (2), un certificat (4) et le certificat (4) étant mis à jour s'il se produit une variation de l'une de la au moins une valeur (14, 16) de fonctionnement au-dessus d'une valeur de seuil déterminée.
